# EUROPEAN PATENT SPECIFICATION

(11) **EP 2 194 302 B1**
(45) Date of publication and mention of the grant of the patent: **05.03.2014**
(21) Application number: 09177146.9
(22) Date of filing: 26.11.2009
(51) Int. Cl.: F16K 31/06, F16K 31/08, H02K 33/12

(54) **Electromagnetic actuators**
Elektromagnetische Aktuatoren
Actionneurs électromagnétiques

(30) Priority: 04.12.2008 US 327842
(43) Date of publication of application: 09.06.2010
(73) Proprietor: General Electric Company, Schenectady, NY 12345 (US)
(72) Inventor: Kopecek, Herbert, 85399 Halbergmoos (DE); Schmitz, Michael Bernhard, 85354 Freising (DE); Ali, Mohamed Ahmed, Katy, TX 77450 (US)
(74) Representative: Illingworth-Law, William Illingworth

(56) References cited:
- EP-A2- 0 955 645
- EP-A2- 1 804 259
- CA-A1- 2 240 876
- GB-A- 772 544
- US-A1- 2006 231 050

## Description

### BACKGROUND

The invention relates generally to electromagnetic valve actuators for controlling valve operation. More particularly, the invention relates to electromagnetic actuators for controlling valve timing in compressors.

A compressor is typically used to boost pressure of a working fluid by receiving power from an electric machine or a turbine, and applying a compressive force to the working fluid. The working fluid may be air, refrigerant, or the like. Compressors are typically classified as positive displacement compressors, dynamic compressors or turbo compressors, depending on the method they employ for compression.

Positive displacement compressors are typically used to boost pressure of the working fluid by reduction in volume, and may be further classified into categories of reciprocating compressors and rotary compressors. Reciprocating compressors typically compress the working fluid via a piston reciprocating inside a cylinder. Rotary compressors typically compress the working fluid via a roller revolving inside a cylinder having an eccentricity.

Large industrial reciprocating compressors are often operated at constant speed. Such compressors may be operated at partial load by controlling opening and closing of compressor inlet valves. By varying the timing of the opening and closing of compressor valves, the mass flow of fluid through the compressor is reduced. Hence, overall performance of the compressor over widely varying speed and load ranges may be improved. Those of ordinary skill in the art will appreciate that the phase angle between a crankshaft and a camshaft may be changed so as to adjust the valve timing events. In this way, it is possible to obtain improved performance for a wider range of engine running characteristics and conditions than when fixed valve timing is employed.

EP-A-0 955 645 discloses an electromagnetic actuator in which a movable part, a statoric element coaxial with the movable part and a permanent magnet are enclosed within a housing.

In one example, a valve is actuated by an electromagnetic actuator having a solenoid. The solenoid includes at least one coil disposed within the core and coupled to a set of power electronics configured to supply current to the coils. The actuator further includes a plunger coupled to an anchor plate and at least one spring configured to guide the plunger. The opening and closing of the valve is controlled by passing current through the coil. The conventional electromagnetic actuator has a relatively large footprint. Since the coils are located inside an actuator housing, heat transport from the coils to the ambient atmosphere is less efficient. As a result, the maximum allowable coil temperature limits a maximum force and actuation speed of the actuator. Moreover, high impact forces acting on the solenoid can influence device precision and, as a consequence, affect long time drift of holding force and actuation speed. High performance materials and bigger dimensions of parts need to be chosen to reduce wear and keep precision of the device at acceptable levels.

An improved and smaller actuation system for controlling valve timing in machines such as piston compressors to achieve flexibility during transient operating conditions is desirable.

### BRIEF DESCRIPTION

The present invention provides a valve configured for use in a machine as defined in claim 1.

In accordance with one exemplary embodiment of the present invention, a valve configured for use in a machine is disclosed. The valve includes a valve plate coupled to the movable device disposed partially within a housing. An electromagnetic actuator includes a first set of permanent magnets provided to the movable device. At least one stator core is disposed proximate to the movable device with a gap between the stator core and the movable device. At least one stator coil is wound to each stator core. A power source is coupled to the at least one stator coil and configured to supply electric current to the at least one stator coil. The opening and closing of the valve plate is controlled by changing direction of electric current flow through the at least one stator coil.

In accordance with another exemplary embodiment of the present invention, a control unit is coupled to the power source and configured to control the supply of electric current to the at least one stator coil based on a load condition of the machine. The opening and closing of a valve plate is controlled by changing direction of electric current flow through the at least one stator coil.

In accordance with another exemplary embodiment of the present invention, at least one stator core is disposed proximate to the movable device with a gap between the stator core and the movable device. The housing is disposed in the gap between the stator core and the movable device.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatical view of a piston machine, for example a piston compressor having an electromagnetic valve actuating system in accordance with an exemplary embodiment of the present invention;
FIG. 2 is a diagrammatical view of a suction valve assembly of a piston machine having an electromagnetic valve actuating system in accordance with an exemplary embodiment of the present invention;
FIG. 3 is a diagrammatical view of a suction valve assembly of a piston machine having an electromagnetic valve actuating system with stator core and coils disposed outside a housing in accordance with an exemplary embodiment of the present invention;
FIG. 4 is a diagrammatical view of a suction valve assembly of a piston machine having an electromagnetic valve actuating system with stator core and coils disposed inside a housing in accordance with an exemplary embodiment of the present invention; and
FIG. 5 is a diagrammatical view of a suction valve assembly of a piston machine having an electromagnetic valve actuating system with a plurality of permanent magnets having same orientations provided to an anchor plate in accordance with an exemplary embodiment of the present invention.

### DETAILED DESCRIPTION

As discussed in detail below, certain embodiments of the present invention provide a valve operating in a hazardous environment in a machine such as a piston machine having a piston disposed in a housing. It should be noted herein that in some embodiments, the valve is also applicable for use in a high pressure and subatmospheric pressure applications. In certain other embodiments, the valve is also applicable for applications involving preventing leakage of fluid and intrusion of impurities. As used herein, singular forms such as "a," "an," and "the" include plural referents unless the context clearly dictates otherwise. At least one valve is coupled to the housing. The valve includes a movable device disposed partially in the housing. The movable device is coupled to a valve plate. A linear electromagnetic actuator is configured to actuate the valve plate. The actuator includes a set of permanent magnets provided to the movable device and at least one stator core disposed proximate to the movable device with a gap between the stator core and the movable device. In certain embodiments, a control unit is configured to control the supply of electric current to the stator coils based on a load condition of the machine. In some embodiments, the piston machine is a piston compressor. It should be noted herein that the exemplary electromagnetic actuator works like a "stepper motor." The actuator provides constant actuation force along the entire stroke of the piston. Hence better controllability of movement of the valve is achieved. Also, the footprint of the magnetic actuator is substantially smaller than conventional designs.

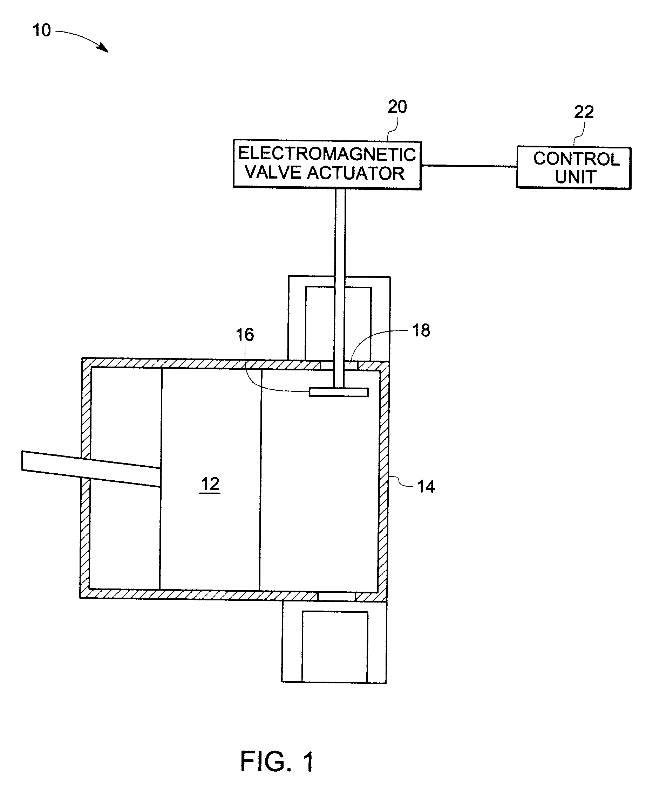

Referring generally to FIG. 1, in accordance with several aspects of the present embodiment, a piston machine 10 is illustrated. In the illustrated embodiment, the piston machine is a compressor 10 having a piston 12 slidably inserted inside a cylinder 14. A suction valve assembly 16 is provided for opening and closing a suction hole 18 provided at a front side of the piston 12. The suction valve assembly 16 is adapted to control intake of fluid through the suction hole 18. The compressor 10 further includes a linear electromagnetic actuator 20 adapted to control an opening and closing of the suction valve assembly 16 during a compression stroke of the compressor 10 to pressurize the fluid. A control unit 22 may be coupled to the electromagnetic actuator 20 and configured to control the operation of the electromagnetic actuator 20. The details of the electromagnetic actuator 20 are illustrated and explained in greater detail with reference to subsequent embodiments.

It should be noted herein that illustrated configuration of the piston compressor is an exemplary embodiment and should be construed as non-limiting. The piston compressor may additionally include optional exemplary aspects in other embodiments. The reciprocating compressor 10 may be used for domestic and industrial purposes. The compressor 10 is typically driven by an electric motor, steam or gas turbine, combustion engine, or the like. As appreciated by those of ordinary skill in the art, the compressor 10 may be used to compress air, hydrogen, methane, butane, or other liquids or gases. It should also be noted that the electromagnetic actuator 20 described herein, is also applicable for other applications including hazardous environment in other machines.

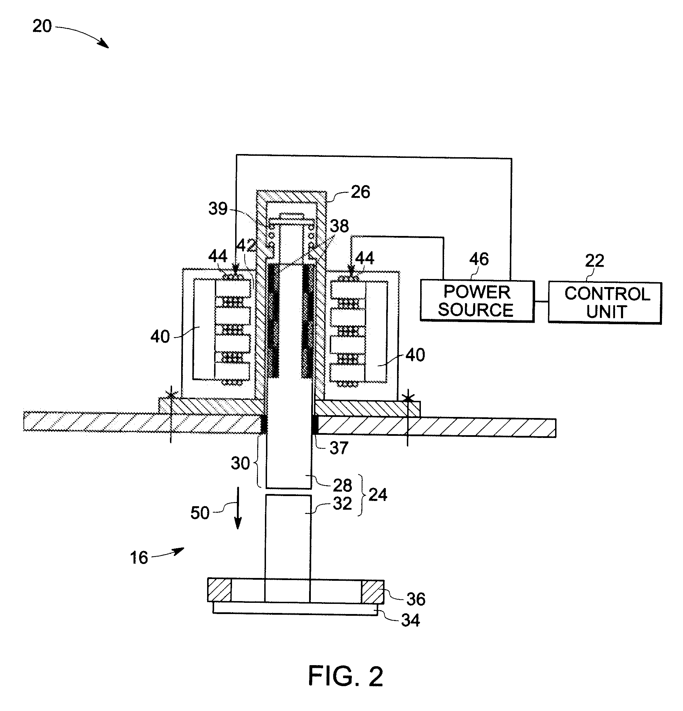

Referring to FIG. 2, a linear electromagnetic actuator 20 adapted to control an opening and closing of the suction valve assembly 16 is illustrated. The suction valve assembly 16 includes a movable device 24 disposed partially in a housing 26. In the illustrated embodiment, the movable device 24 includes an anchor plate 28 disposed partially in the housing 26 with a portion 30 of the anchor plate 28 protruding from the housing 26. The portion 30 of the anchor plate 28 is coupled to an unloader rod (pushing rod) 32. The pushing rod 32 is coupled to a valve plate 34 movably disposed on a valve seat 36. In other embodiments, the configuration of the valve plate 34 and valve seat 36 may vary depending on the application.

In one embodiment, the housing 26 is a high-pressure housing to facilitate higher actuation force. In another embodiment, the housing 26 may have thinner walls and may be provided with a high pressure sealing 37 to maintain predetermined pressure within the housing.

In the illustrated embodiment, the actuator 20 includes a first set of permanent magnets 38 having alternating orientations/polarities disposed around the anchor plate 28 within the housing 26. The number and configuration of the first set of permanent magnets 38 may vary depending on the application. A plurality of stator cores 40 are disposed proximate to the anchor plate 28 with a gap 42 between the stator cores 40 and the anchor plate 28. It should be noted herein that in the illustrated embodiment, the housing 26 is disposed in the gap 42 between the stator cores 40 and the anchor plate 28. A plurality of stator coils 44 are wound to each stator core 40. It should be noted that the number and configuration of the stator core 40 and the stator coils 44 might vary depending upon the application. A power source 46 is coupled to the stator coils 44 provided to each stator core 40 and configured to supply electric current to the stator coils 44.

The control unit 22 is coupled to the power source 46 and configured to control the supply of electric current to the stator coils 44 based on a load condition of the machine 10. The opening and closing of the valve plate 34 is controlled by changing direction of electric current flow through the stator coils 44. In one embodiment, the control unit 22 includes an electronic logic controller that is programmable by a user. The control unit 22 may control the valve actuator based on the load condition of the compressor 10. Those of ordinary skill in the art will appreciate in light of the present discussion that any number of compressor constructions are envisaged.

In some embodiments, the control unit 22 may further include a database, an algorithm, and a data analysis block (not shown). The database may be configured to store predefined information about the compressor 10. For example, the database may store information relating to crank angle, compressor speed, compressor load, intake fluid pressure, compressed fluid pressure, type of fluid, or the like. The database may also include instruction sets, maps, lookup tables, variables, or the like. Such maps, lookup tables, instruction sets, are operative to correlate characteristics of the valve assembly to specified compressor operation parameters such as compressor speed, crank angle, compressor pressure, compressor load, type of fluid, or the like. Furthermore, the database may be configured to store actual sensed/detected information pertaining to the compressor 10. The algorithm may facilitate the processing of sensed information pertaining to the compressor 10.

The data analysis block may include a variety of circuitry types, such as a microprocessor, a programmable logic controller, a logic module or the like. The data analysis block in combination with the algorithm may be used to perform the various computational operations relating to determination of closing time of the suction valves, predetermined time period for controlling opening and closing of the valves, power required to drive the valve, or the like. Any of the above mentioned parameters may be selectively and/or dynamically adapted or altered relative to time.

The valve plate 34 is configured to move between a "closed position" and an "open position" to prevent or permit fluid flow respectively. In the illustrated embodiment, the valve plate 34 is in a closed position i.e. the valve plate 34 is contacting the valve seat 36. When the valve plate 34 is in an open position, the valve plate does not contact the valve seat 36. The valve plate 34 is opened by actuating the movable device 24 downwards against the valve seat 36. The movement of the movable device 24 is controlled by controlling the supply of electric current through the stator coils 44. When supply of electric current to the stator coils 44 is switched off, the valve plate 34 is moved to a closed position. When electrical current is supplied to the stator coils 44, the stator core 40 in conjunction with the first set of permanent magnets 38 generates an electromagnetic force causing the anchor plate 28 to be pulled downwards. As a result, the unloader rod 32 coupled to the anchor plate 28 is also pushed downward towards the valve seat 36. As a result of this downward movement (shown by the arrow 50) of the movable device 24, the valve plate 34 is pushed away from the valve seat 36 and the valve plate 34 is opened. As long as the electrical current is supplied to the stator coils 44, the electromagnetic force generated by the actuator 20 biases the movable device 24 against the valve seat 36, thus maintaining the valve plate 34 open against a force that is generated by a reverse fluid flow through the valve.

In certain embodiments, the amount of opening and closing of the valve plate 34 is controlled by controlling direction of supply of electric current through the stator coils 44. In one embodiment, the actuator 20 is used to maintain the valve plate 34 in an open position for a predetermined period of time. The longer the valve plate 34 is maintained in an open position during the compression stroke, the more gas that is pushed back into a suction line and the less gas that is delivered to a compressor discharge line. The amount of gas delivered by the compressor 10 can be controlled by controlling the opening time of the valve plate 34.

In the illustrated embodiment, a biasing device 39 is disposed between the movable device 24 and the housing 26. The biasing device 39 is configured to actuate the actuator 20 and bias the valve plate 34 to a predetermined position (may be opened or closed position) when a power supply to the electromagnetic actuator 20 is interrupted or turned off. In one embodiment, this ensures that the valve plate 34 is not in an open position when power supply to the electromagnetic actuator 20 is cutoff. In the illustrated embodiment, the biasing device 39 includes a biasing spring. In other embodiments, other suitable biasing devices are also envisaged.

In certain embodiments, the electromagnetic valve actuator 20 is employed to control the closing of the suction valve assembly 16 during the compression stroke of the compressor 10 at no-load or partial load operating conditions. Although in the illustrated embodiment, one suction valve assembly 16 is shown, the compressor may include a plurality of suction valves adapted to control the intake of fluid into the compressor 10. An electromagnetic actuator may be provided for each valve, in order to operate each valve separately and ensure flexibility. For example, depending on the load condition of the compressor, it may be required to vary the closing time of one set of valves from the closing time of the other set valves during compression stroke of the compressor. It should be noted herein that the exemplary valve actuation system is applicable to other valves operating in hazardous environments in machines.

As discussed earlier, the actuator 20 provides constant actuation force along the stroke of the piston that improves controllability of the movement. There are no electrical components disposed inside the compressor, since the housing 26 of the actuator 20 is disposed between the stator core 40 and the anchor plate 28, which makes it easier to fulfill safety regulations. Also, cooling of the stator coils 44 is easier since the coils 44 are disposed outside the housing 26. The footprint of the actuator design is significantly smaller. Hence, there is no adverse effect on the overall performance of the actuator 20. Moreover, there is limited impact force between the movable device 24 and the stator core 40, since the stator core 40 does not contact the movable device 24.

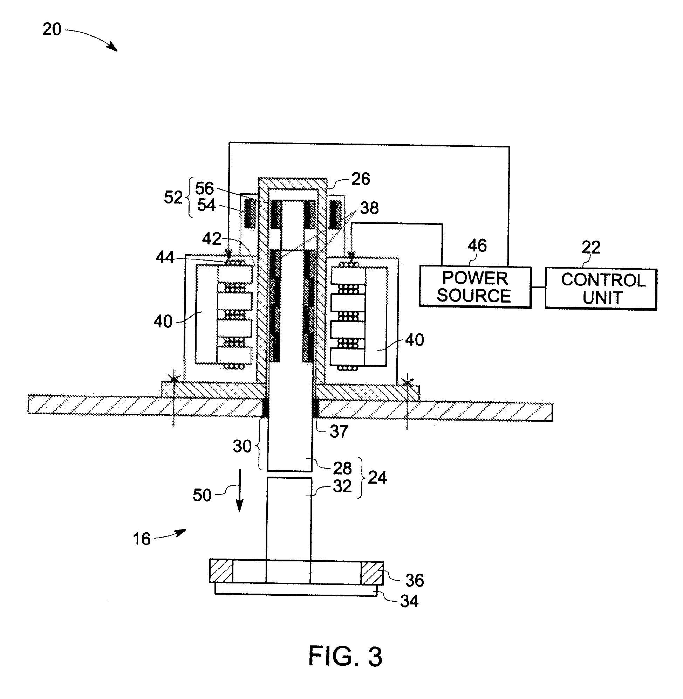

Referring to FIG. 3, a linear electromagnetic actuator 20 adapted to control an opening and closing of the suction valve assembly 16 is illustrated. In the illustrated embodiment, the configuration of the actuator 20 is similar to the embodiment illustrated in FIG. 2, except that a biasing device 52 is disposed inside and outside of the housing 26. The biasing device 52 includes a second set of permanent magnets 54 disposed outside the housing 26, and a third set of permanent magnets 56 disposed within the housing 26 around the anchor plate 28. Similar to the previous embodiment, the biasing device 52 is configured to actuate the actuator 20 and bias the valve plate 34 to a predetermined position when a power supply to the electromagnetic actuator 20 is interrupted or turned off. In other embodiments, other suitable biasing devices are also envisaged.

The actuator 20 can be actively moved upwards or downwards by the current flow direction through the stator coils 44. The actuation force is constant during the stroke of the piston. The coils 44 may be molded using molding material configured to improve heat transfer from the coils 44 to the ambient. The coils 44 do not contact the gas, thereby preventing sparking within the actuator.

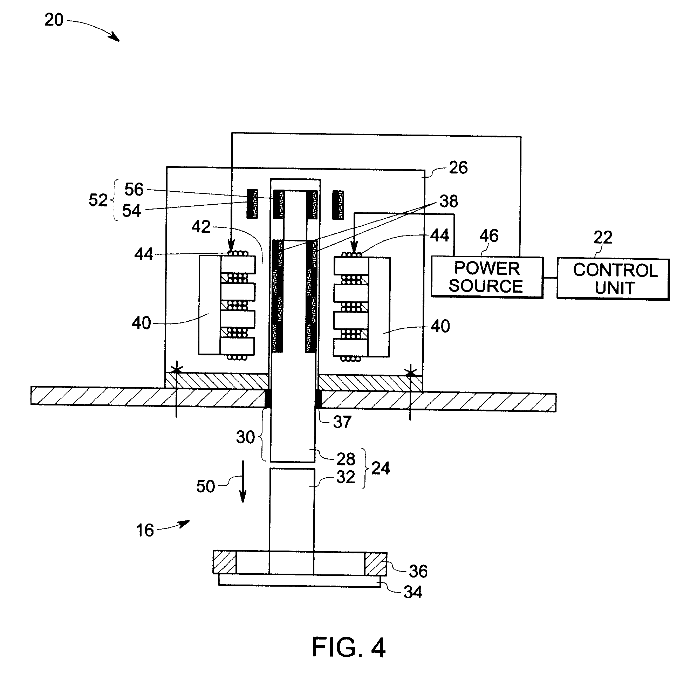

Referring to FIG. 4, a linear electromagnetic actuator 20 adapted to control an opening and closing of the suction valve assembly 16 is illustrated. It should be noted herein that in the illustrated embodiment, the configuration of the actuator 20 is similar to the embodiment illustrated in FIG. 3; except that the stator core 40 and stator coils 44 are disposed within the housing 26. The stator coils 44 and the stator core 40 are disposed inside the housing 26 thereby reducing the gap between the stator core 40 and the anchor plate 28. This facilitates the actuator 20 to provide higher actuation forces. There is no direct impact between the stator core 40 and the anchor plates 28, resulting in reduced wear and less negative influence on the precision of the device.

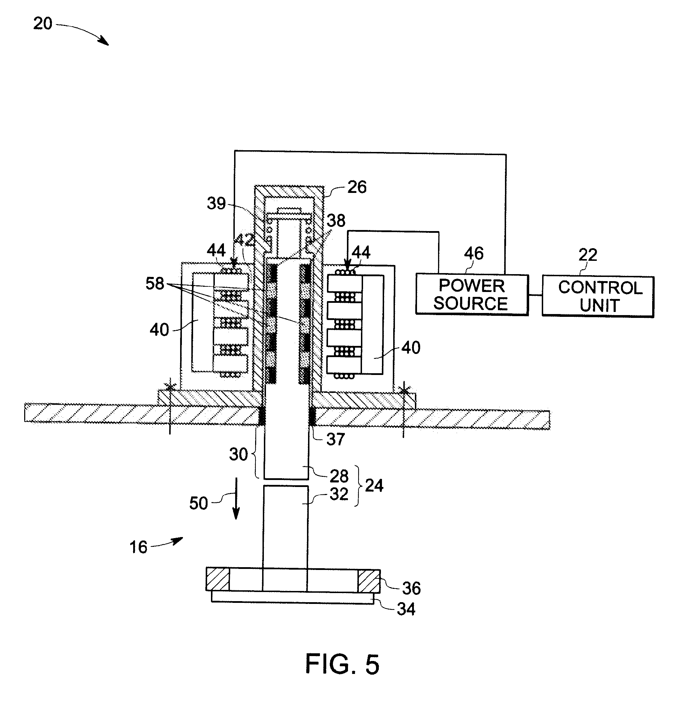

Referring to FIG. 5, a linear electromagnetic actuator 20 adapted to control an opening and closing of the suction valve assembly 16 is illustrated. It should be noted herein that in the illustrated embodiment, the configuration of the actuator 20 is similar to the embodiment illustrated in FIG. 2; except that the first set of permanent magnets 38 have the same alternating orientations/polarities are disposed around the anchor plate 28 within the housing 26. A plurality of iron teeth 58 are disposed between the permanent magnets 38 having same alternating orientations/polarities. The actuator 20 of embodiments discussed with reference to FIGS. 1-5, provides a substantially higher actuation force at the beginning of the piston stroke and constant actuation force for the remaining stroke of the piston.

While only certain features of the invention have been illustrated and described herein, many modifications and changes will occur to those skilled in the art. It is, therefore, to be understood that the appended claims are intended to cover all such modifications and changes as fall within the true scope of the invention.

## Claims

1. A valve configured for use in a machine, the valve comprising:
a movable device (24) disposed partially in a housing (26);
a valve plate (34) coupled to the movable device (24); and
a linear electromagnetic actuator (20) comprising:
a first set of permanent magnets (38) provided to the movable device (24);
at least one stator core (40) disposed proximate to the movable device (24) with a gap (42) between the stator core (40) and the movable device (24);
at least one stator coil (44) wound to each stator core (40); and
a power source (46) coupled to the at least one stator coil (44) and configured to supply electric current to the at least one stator coil (44); wherein opening and closing of the valve plate (34) is controlled by changing direction of electric current flow through the at least one stator coil (44);
**characterised by** that
the housing (26) is disposed between the at least one stator core (40) and the movable device (24); and
the at least one stator coil (44) is disposed outside the housing (26).

2. The valve of claim 1, wherein the valve comprises a suction valve (16) configured for use in a piston compressor (10).

3. The valve of claim 1 or claim 2, further comprising a high pressure sealing (37) configured to maintain a predetermined pressure within the housing (26).

4. The valve of any one of the preceding claims, further comprising a plurality of iron teeth (58) disposed between the first set of permanent magnets (38) having same polarities.

5. The valve of any one of the preceding claims, further comprising a biasing device (39, 52) disposed between the movable device (24) and the housing (26); wherein the biasing device (39, 52) is configured to bias the valve plate (34) to a predetermined position when power supply to the at least one stator coil (44) is interrupted or turned off.

6. The valve of any one of the preceding claims, further comprising a biasing device (39, 52) disposed outside the housing (26); wherein the biasing device (39, 52) is configured to bias the valve plate (34) to a predetermined position when power supply to the at least one stator coil (44) is interrupted or turned off.

7. The valve of any one of the preceding claims, further comprising:
a plurality of permanent magnets provided to the movable device (24); and
a control unit (22) coupled to the power source (46) and configured to control the supply of electric current to the at least one stator coil (44) based on a load condition of the machines.

8. The valve of claim 7, wherein the movable device (24) comprises an anchor plate (28) disposed partially within the housing (26).

9. The valve of any one of the preceding claims, further comprising:
a plurality of permanent magnets provided to the movable device (24); and
wherein the housing (26) is disposed in the gap (42) between the stator core (40) and the movable device (24).

## Patentansprüche

1. Ventil, das zur Verwendung in einer Maschine ausgebildet ist, wobei das Ventil umfasst:
eine bewegliche Vorrichtung (24), die teilweise in einem Gehäuse (26) angeordnet ist;
eine Ventilplatte (34), die mit der beweglichen Vorrichtung (24) gekoppelt ist; und
ein lineares elektromagnetisches Stellglied (20), umfassend:
einen ersten Satz Permanentmagneten (38), die für die bewegliche Vorrichtung (24) zur Verfügung gestellt sind;
mindestens ein Ständerblechpaket (40), das in der Nähe der beweglichen Vorrichtung (24) mit einem Zwischenraum (42) zwischen dem Ständerblechpaket (40) und der beweglichen Vorrichtung (24) angeordnet ist;
mindestens eine Ständerspule (44), die um jedes Ständerblechpaket (40) gewickelt ist; und
eine Stromquelle (46), die mit der mindestens einen Ständerspule (44) gekoppelt und ausgebildet ist, um der mindestens einen Ständerspule (44) elektrischen Strom zu liefern; wobei das Öffnen und das Schließen der Ventilplatte (34) durch Ändern der elektrischem Stromflussrichtung durch die mindestens eine Ständerspule (44) gesteuert wird;
**dadurch gekennzeichnet, dass**
das Gehäuse (26) zwischen dem mindestens einen Ständerblechpaket (40) und der beweglichen Vorrichtung (24) angeordnet ist; und
die mindestens eine Ständerspule (44) außerhalb des Gehäuses (26) angeordnet ist.

2. Ventil nach Anspruch 1, wobei das Ventil ein Ansaugventil (16) umfasst, das zur Verwendung in einem Kolbenverdichter (10) ausgebildet ist.

3. Ventil nach Anspruch 1 oder Anspruch 2, des Weiteren eine Hochdruckdichtung (37) umfassend, die ausgebildet ist, um einen vorbestimmten Druck innerhalb des Gehäuses (26) aufrecht zu erhalten.

4. Ventil nach irgendeinem der vorhergehenden Ansprüche, des Weiteren eine Vielzahl von eisernen Zähnen (58) umfassend, die zwischen dem ersten Satz Permanentmagneten (38) angeordnet sind, welche gleiche Polaritäten aufweisen.

5. Ventil nach irgendeinem der vorhergehenden Ansprüche, des Weiteren eine Vorspannungsvorrichtung (39, 52) umfassend, die zwischen der beweglichen Vorrichtung (24) und dem Gehäuse (26) angeordnet ist; wobei die Vorspannungsvorrichtung (39, 52) ausgebildet ist, um die Ventilplatte (34) in eine vorbestimmte Stellung vorzuspannen, wenn die Stromversorgung zu der mindestens einen Ständerspule (44) unterbrochen oder abgeschaltet wird.

6. Ventil nach irgendeinem der vorhergehenden Ansprüche, des Weiteren eine Vorspannungsvorrichtung (39, 52) umfassend, die außerhalb des Gehäuses (26) angeordnet ist; wobei die Vorspannungsvorrichtung (39, 52) ausgebildet ist, um die Ventilplatte (34) in eine vorbestimmte Stellung vorzuspannen, wenn die Stromversorgung zu der mindestens einen Ständerspule (44) unterbrochen oder abgeschaltet wird.

7. Ventil nach irgendeinem der vorhergehenden Ansprüche, des Weiteren umfassend:
eine Vielzahl von Permanentmagneten, die für die bewegliche Vorrichtung (24) zur Verfügung gestellt sind; und
eine Steuereinheit (22), die mit der Stromquelle (46) gekoppelt und ausgebildet ist, um die Zufuhr von elektrischem Strom zu der mindestens einen Ständerspule (44) auf der Grundlage eines Belastungszustandes der Maschinen zu steuern.

8. Ventil nach Anspruch 7, wobei die bewegliche Vorrichtung (24) eine Ankerplatte (28) umfasst, die teilweise innerhalb des Gehäuses (26) angeordnet ist.

9. Ventil nach irgendeinem der vorhergehenden Ansprüche, des Weiteren umfassend:
eine Vielzahl von Permanentmagneten, die für die bewegliche Vorrichtung (24) zur Verfügung gestellt sind; und
wobei das Gehäuse (26) in dem Zwischenraum (42) zwischen dem Ständerblechpaket (40) und der beweglichen Vorrichtung (24) angeordnet ist.

## Revendications

1. Soupape configurée pour un usage dans une machine, la soupape comprenant :
un dispositif mobile (24) disposé partiellement dans un boîtier (26) ;
une plaque de soupape (34) couplée au dispositif mobile (24) ; et
un actionneur électromagnétique linéaire (20) comprenant :
un premier jeu d'aimants permanents (38) fournis au dispositif mobile (24) ;
au moins un noyau statorique (40) disposé à proximité du dispositif mobile (24) avec un intervalle (42) entre le noyau statorique (40) et le dispositif mobile (24) ;
au moins une bobine statorique (44) enroulée sur chaque noyau statorique (40) ; et
une source d'énergie (46) couplée à l'au moins une bobine statorique (44) et configurée pour fournir du courant électrique à l'au moins une bobine statorique (44) ; dans laquelle l'ouverture et la fermeture de la plaque de soupape (34) sont commandées en changeant le sens de circulation du courant électrique à travers l'au moins une bobine statorique (44) ;
**caractérisée en ce que** le boîtier (26) est disposé entre l'au moins un noyau statorique (40) et le dispositif mobile (24) ; et
l'au moins une bobine statorique (44) est disposée à l'extérieur du boîtier (26).

2. Soupape selon la revendication 1, dans laquelle la soupape comprend une soupape d'aspiration (16) configurée pour un usage dans un compresseur à piston (10).

3. Soupape selon la revendication 1 ou la revendication 2, comprenant en outre un système étanche sous pression élevée (37) configuré pour maintenir une pression prédéterminée dans le boîtier (26).

4. Soupape selon l'une quelconque des revendications précédentes, comprenant en outre une pluralité de dents de fer (58) disposées entre le premier jeu d'aimants permanents (38) ayant les mêmes polarités.

5. Soupape selon l'une quelconque des revendications précédentes, comprenant en outre un dispositif de sollicitation (39, 52) disposé entre le dispositif mobile (24) et le boîtier (26) ; dans laquelle le dispositif de sollicitation (39, 52) est configuré pour presser la plaque de soupape (34) dans une position prédéterminée lorsque l'alimentation en énergie à l'au moins une bobine statorique (44) est interrompue ou arrêtée.

6. Soupape selon l'une quelconque des revendications précédentes, comprenant en outre un dispositif de sollicitation (39, 52) disposé à l'extérieur du boîtier (26) ; dans laquelle le dispositif de sollicitation (39, 52) est configuré pour presser la plaque de soupape (34) dans une position prédéterminée lorsque l'alimentation en énergie à l'au moins une bobine statorique (44) est interrompue ou arrêtée.

7. Soupape selon l'une quelconque des revendications précédentes, comprenant par tailleurs :
une pluralité d'aimants permanents fournis au dispositif mobile (24) ; et
une unité de commande (22) couplée à la source d'alimentation (46) et configurée pour commander l'alimentation en courant électrique à l'au moins une bobine statorique (44) sur la base d'un état de charge des machines.

8. Soupape selon la revendication 7, dans laquelle le dispositif mobile (24) comprend une plaque d'ancrage (28) disposée en partie à l'intérieur du boîtier (26).

9. Soupape selon l'une quelconque des revendications précédentes, comprenant en outre :
une pluralité d'aimants permanents fournis au dispositif mobile (24) ; et
dans laquelle le boîtier (26) est disposé dans l'intervalle (42) entre le noyau statorique (40) et le dispositif mobile (24).
